# EUROPÄISCHE PATENTANMELDUNG

(11) **EP 3 421 849 A1**
(43) Veröffentlichungstag der Anmeldung: **02.01.2019**
(21) Anmeldenummer: 17179102.3
(22) Anmeldetag: 30.06.2017
(51) Int. Cl.: F16K 37/00, F16K 51/02, F16K 3/02, F16K 3/18, F16K 3/04

(54) **VAKUUMVENTIL MIT TEMPERATURSENSOR**

(71) Anmelder: VAT Holding AG, 9469 Haag (CH)
(72) Erfinder: Eschenmoser, Adrian, CH-9472 Grabs (CH); Hofer, Andreas, CH-9469 Widnau (CH)
(74) Vertreter: Kaminski Harmann

(57) **Zusammenfassung**

Vakuumventil (1') zur Regelung eines Volumen- oder Massenstroms und/oder zum gasdichten Unterbrechen eines Fliesswegs, mit einem Ventilsitz (3), der eine eine Öffnungsachse (H) definierende Ventilöffnung (2) und eine die Ventilöffnung (2) umlaufende erste Dichtfläche (3) aufweist, einem Ventilverschluss (4) zur Regelung des Volumen- oder Massenstroms und/oder zur Unterbrechung des Fliesswegs, mit einer zu der ersten Dichtfläche (3) korrespondierenden zweiten Dichtfläche (6), einer mit dem Ventilverschluss (4) gekoppelten Antriebseinheit (7), die derart ausgebildet ist, dass der Ventilverschluss (4) von einer Offenposition (O), in welcher der Ventilverschluss (4) und der Ventilsitz (3) relativ zueinander kontaktlos vorliegen, in eine Schliessposition, in welcher über eine dazwischen liegende Dichtung ein dichtender Kontakt zwischen der ersten Dichtfläche (3) und der zweiten Dichtfläche (6) besteht und die Ventilöffnung (2) dadurch gasdicht verschlossen ist, und zurück verstellbar ist. Das Vakuumventil (1') weist mindestens einen Temperatursensor (10) auf, wobei der Temperatursensor (10) derart ausgebildet und angeordnet ist, dass mittels des Temperatursensors (10) ein eine thermische Information mit Bezug zu zumindest einem Teil des Vakuumventils (1') repräsentierendes Messsignal erfassbar ist.

## Beschreibung

Die Erfindung betrifft ein Vakuumventil mit einer Sensoranordnung mit mindestens einem ein verformungsempfindliches Element aufweisenden Temperatursensor.

Allgemein sind Vakuumventile zur Regelung eines Volumen- oder Massenstroms und/oder zum im Wesentlichen gasdichten Schliessen eines Fliesswegs, der durch eine in einem Ventilgehäuse ausgeformte Öffnung führt, in unterschiedlichen Ausführungsformen aus dem Stand der Technik bekannt und kommen insbesondere bei Vakuumkammersystemen im Bereich der IC-, Halbleiter- oder Substratfertigung, die in einer geschützten Atmosphäre möglichst ohne das Vorhandensein verunreinigender Partikel stattfinden muss, zum Einsatz. Derartige Vakuumkammersysteme umfassen insbesondere mindestens eine zur Aufnahme von zu bearbeitenden oder herzustellenden Halbleiterelementen oder Substraten vorgesehene, evakuierbare Vakuumkammer, die mindestens eine Vakuumkammeröffnung besitzt, durch welche die Halbleiterelemente oder anderen Substrate in die und aus der Vakuumkammer führbar sind, sowie mindestens eine Vakuumpumpe zum Evakuieren der Vakuumkammer. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozess-Vakuumkammern, in denen die innerhalb der Prozess-Vakuumkammern befindlichen Teile mittels jeweils einer Bearbeitungsvorrichtung bearbeitet werden. Sowohl während des Bearbeitungsprozesses innerhalb der Prozess-Vakuumkammern, als auch während des Transports von Kammer zu Kammer müssen sich die hochsensiblen Halbleiterelemente oder Substrate stets in geschützter Atmosphäre - insbesondere in luftleerer Umgebung - befinden.

Hierfür kommen zum einen Peripherieventile zum Öffnen und Schliessen einer Gaszu- oder -abfuhr und zum anderen Transferventile zum Öffnen und Schliessen der Transferöffnungen der Vakuumkammern für das Ein- und Ausführen der Teile zum Einsatz.

Die von Halbleiterteilen durchlaufenen Vakuumventile werden aufgrund des beschriebenen Anwendungsgebiets und der damit verbundenen Dimensionierung als Vakuum-Transferventile, aufgrund ihres mehrheitlich rechteckigen Öffnungsquerschnitts auch als Rechteckventil und aufgrund ihrer üblichen Funktionsweise auch als Schieberventil, Rechteckschieber oder Transferschieberventil bezeichnet.

Peripherieventile werden insbesondere zur Steuerung oder Regelung des Gasflusses zwischen einer Vakuumkammer und einer Vakuumpumpe oder einer weiteren Vakuumkammer eingesetzt. Peripherieventile befinden sich beispielsweise innerhalb eines Rohrsystems zwischen einer Prozess-Vakuumkammer oder einer Transferkammer und einer Vakuumpumpe, der Atmosphäre oder einer weiteren Prozess-Vakuumkammer. Der Öffnungsquerschnitt derartiger Ventile, auch Pumpenventile genannt, ist in der Regel kleiner als bei einem Vakuum-Transferventil. Da Peripherieventile abhängig vom Einsatzgebiet nicht nur zum vollständigen Öffnen und Schliessen einer Öffnung, sondern auch zum Steuern oder Regeln eines Durchflusses durch kontinuierliches Verstellen des Öffnungsquerschnitts zwischen einer vollständigen Offenstellung und einer gasdichten Geschlossenstellung eingesetzt werden, werden sie auch als Regelventile bezeichnet. Ein mögliches Peripherieventil zur Steuerung oder Regelung des Gasflusses ist das Pendelventil.

Bei einem typischen Pendelventil, wie beispielsweise aus der US 6,089,537 (Olmsted) bekannt, wird in einem ersten Schritt ein in der Regel runder Ventilteller über eine in der Regel ebenfalls runde Öffnung von einer die Öffnung freigebenden Stellung in eine die Öffnung überdeckende Zwischenstellung rotatorisch geschwenkt. Im Falle eines Schieberventils, wie beispielsweise in der US 6,416,037 (Geiser) oder der US 6,056,266 (Blecha) beschrieben, ist der Ventilteller, wie auch die Öffnung, meist rechteckig ausgebildet und wird in diesem ersten Schritt linear von einer die Öffnung freigebenden Stellung in eine die Öffnung überdeckende Zwischenstellung geschoben. In dieser Zwischenstellung befindet sich der Ventilteller des Pendel- oder Schieberventils in einer beabstandeten Gegenüberlage zu dem die Öffnung umgebenden Ventilsitz. In einem zweiten Schritt wird der Abstand zwischen dem Ventilteller und dem Ventilsitz verkleinert, so dass der Ventilteller und der Ventilsitz gleichmässig aufeinander gedrückt werden und die Öffnung im Wesentlichen gasdicht verschlossen wird. Diese zweite Bewegung erfolgt vorzugsweise im Wesentlichen in eine senkrechte Richtung zum Ventilsitz. Die Abdichtung kann z.B. entweder über einen auf der Verschlussseite des Ventiltellers angeordneten Dichtungsring, der auf den die Öffnung umlaufenden Ventilsitz gepresst wird, erfolgen, oder über einen Dichtungsring auf dem Ventilsitz, gegen den die Verschlussseite des Ventiltellers gedrückt wird. Durch den in zwei Schritten erfolgenden Schliessvorgang wird der Abdichtring zwischen dem Ventilteller und dem Ventilsitz kaum Scherkräften, die den Abdichtring zerstören würden, unterworfen, da die Bewegung des Ventiltellers im zweiten Schritt im Wesentlichen geradlinig senkrecht auf den Ventilsitz stattfindet.

Unterschiedliche Dichtvorrichtungen sind aus dem Stand der Technik bekannt, beispielsweise aus der US 6,629,682 B2 (Duelli). Ein geeignetes Material für Dichtungsringe und Dichtungen bei Vakuumventilen ist beispielsweise Fluorkautschuk, auch FKM genannt, insbesondere das unter dem Handelsnamen "Viton" bekannte Fluorelastomer, sowie Perfluorkautschuk, kurz FFKM.

Aus dem Stand der Technik sind unterschiedliche Antriebssysteme zur Erzielung diese Kombination einer beim Pendelventil rotatorischen und beim Schieberventil translatorischen Bewegung des Ventiltellers parallel über die Öffnung und einer im Wesentlichen translatorischen Bewegung senkrecht auf die Öffnung bekannt, beispielsweise aus der US 6,089,537 (Olmsted) für ein Pendelventil und aus der US 6,416,037 (Geiser) für ein Schieberventil.

Das Anpressen des Ventiltellers auf den Ventilsitz muss derart erfolgen, dass sowohl die geforderte Gasdichtigkeit innerhalb des gesamten Druckbereichs sichergestellt ist, als auch eine Beschädigung des Abdichtmediums, insbesondere des Abdichtrings in Form eines O-Rings, durch zu grosse Druckbeanspruchung vermieden wird. Um dies zu gewährleisten, sehen bekannte Ventile eine in Abhängigkeit von der zwischen den beiden Ventiltellerseiten herrschenden Druckdifferenz geregelte Anpressdruckregelung des Ventiltellers vor. Besonders bei grossen Druckschwankungen oder dem Wechsel von Unterdruck auf Überdruck, oder umgekehrt, ist eine gleichmässige Kraftverteilung entlang des gesamten Umfangs des Abdichtrings jedoch nicht immer gewährleistbar. Generell wird angestrebt, den Abdichtring von Abstützkräften, die sich aus dem an das Ventil anliegenden Druck ergeben, zu entkoppeln. In der US 6,629,682 (Duelli) wird hierzu z.B. ein Vakuumventil mit einem Abdichtmedium vorgeschlagen, das sich aus einem Abdichtring und einem danebenliegenden Abstützring zusammensetzt, so dass der Abdichtring von Abstützkräften im Wesentlichen befreit ist.

Um die geforderte Gasdichtigkeit, gegebenenfalls sowohl für Über- als auch Unterdruck, zu erreichen, sehen zusätzlich oder alternativ zum zweiten Bewegungsschritt manche bekannte Pendelventile oder Schieberventile einen senkrecht zum Ventilteller verschiebbaren, die Öffnung umgebenden Ventilring vor, der zum gasdichten Schliessen des Ventils auf den Ventilteller gedrückt wird. Derartige Ventile mit relativ zum Ventilteller aktiv verschiebbaren Ventilringen sind beispielsweise aus der DE 1 264 191 B1, der DE 34 47 008 C2, der US 3,145,969 (von Zweck) und der DE 77 31 993 U bekannt. In der US 5,577,707 (Brida) wird ein Pendelventil mit einem eine Öffnung aufweisenden Ventilgehäuse und einem parallel über die Öffnung schwenkbaren Ventilteller zum Steuern eines Durchflusses durch die Öffnung beschrieben. Ein Ventilring, der die Öffnung umschliesst, ist senkrecht in Richtung zum Ventilteller mittels mehrerer Federn und Druckluftzylinder aktiv bewegbar. Eine mögliche Weiterentwicklung dieses Pendelventils wird in der US 2005/0067603 A1 (Lucas et al.) vorgeschlagen.

Da oben genannte Ventile unter anderem bei der Herstellung hochsensibler Halbleiterelemente in einer Vakuumkammer zum Einsatz kommen, muss eine entsprechende Abdichtwirkung auch für solche Prozesskammern verlässlich gewährleistet sein. Hierfür ist insbesondere der Zustand des gesamten Ventils oder insbesondere eines Dichtmaterials oder einer bei Verpressung mit dem Dichtmaterial in Kontakt stehenden Dichtfläche von Bedeutung. Im Verlauf der Betriebsdauer eines Vakuumventils können typischerweise Veränderungen von Ventilkomponenten durch Abnutzungen des Dichtmaterials oder der Dichtflächen sowie durch strukturelle Veränderungen der Ventilkomponenten, z.B. Antriebseinheit oder Ventilstange, aufgrund von Umwelteinflüssen (Temperatur, Feuchtigkeit, Stösse etc.) auftreten.

Um eine dabei eventuell entstehende Undichtigkeit zu vermeiden oder die Qualität der Dichtung auf einem konstant ausreichend hohen Niveau zu halten, kann ein Ventilverschluss typischerweise in bestimmten zeitlichen Abständen ausgetauscht bzw. erneuert werden. Ein solcher Wartungszyklus bemisst sich dabei in der Regel an der Anzahl der zu erwartenden Öffnungs- und Schliesszyklen in einem bestimmten Zeitraum oder auch anhand eine Anzahl und Ausprägung von eintretenden Umwelteinflüssen. Die Wartung erfolgt typischerweise vorsorglich, um das Eintreten einer Undichtigkeit vorab weitestgehend ausschliessen zu können.

Ein solches Instandhaltungserfordernis beschränkt sich nicht allein auf das Dichtmaterial oder den Ventilteller, sondern erstreckt sich insbesondere ebenso auf andere Ventilkomponenten wie die Antriebseinheit oder den Ventilsitz, der einen zum Ventilteller korrespondierenden Teil des Vakuumventils bildet. Die Struktur einer Dichtfläche seitens des Ventilsitzes, z.B. einer in den Ventilsitz eingelassenen Nut, ist von einer mechanischen Beanspruchung ebenso betroffen. Daher kann auch eine aus einem Betrieb des Ventils resultiere strukturelle Veränderung der Nut oder des Ventilsitzes eine Beeinträchtigung der Dichtung bewirken. Auch hierfür sind üblicherweise entsprechende Wartungsintervalle definiert.

Ein Nachteil dieser Ventilwartung liegt in deren vorsorglichem Charakter. Die von der Wartung betroffenen Teile werden zumeist vor Ablauf deren regulärer oder tatsächlicher Lebensdauer erneuert oder ersetzt. Jeder derartige Wartungsschritt bedeutet in der Regel eine gewisse Stillstandszeit für einen Produktionsprozess und einen erhöhnten technischen und finanziellen Aufwand. Dies bedeutet dann in Summe einen Stillstand der Produktion in Abständen, die kürzer sind als erforderlich, und häufiger als dies überhaupt notwendig wäre.

Zudem werden typischerweise Teile des Ventils, z.B. die Antriebseinheit, nicht im Rahmen einer turnusmässigen und vorsorglichen Wartung ausgetauscht oder erneuert. Selbst wenn eine solche Komponente jedoch regelmässig erneuert würde, so bleibt diese auch im Quasi-Neuzustand allfälligen äusseren sowie inneren Einflüssen ausgesetzt, wodurch beispielsweise zumindest temporär unerwünschte Veränderungen des Ventils auftreten können. Z.B. kann eine hierdurch bewirkte Abweichung eines Verstellwegs für den Ventilverschluss dazu führen, dass eine Soll-Dichtwirkung nicht mehr erreicht werden kann.

Der Erfindung liegt somit die Aufgabe zugrunde, ein verbessertes Vakuumventil bereitzustellen, welches einen optimierten Betrieb des Vakuumventils erlaubt.

Eine weitere Aufgabe der Erfindung besteht darin, ein verbessertes Vakuumventil bereitzustellen, welches eine optimierte Ventilwartung und damit eine Verbesserung, d.h. Verkürzung von allfälligen Prozessstillständen, erlaubt.

Eine weitere Aufgabe der Erfindung ist es ein solches Ventilsystem bereitzustellen, mit dem eine zuverlässigere gasdichte Abdichtung eines Prozessvolumens erreicht werden kann, insbesondere wobei die Qualität der Abdichtung prognostizierbar ist.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die grundlegende Idee der vorliegenden Erfindung ist es ein Vakuumventil mit einer Sensoranordnung mit mindestens einem Temperatursensor zu kombinieren und das Ventil und die Sensoranordnung dabei so auszugestalten, dass damit eine Erfassung und/oder Überwachung von thermischen Einflüssen oder Ereignissen an einem bestimmten Teil des Ventils oder an dem Ventil gesamthaft erfolgen kann.

Beispielsweise kann die Temperatur an einem Antriebsgehäuse im Bereich temperaturkritischer Komponenten, wie z.B. einem Pneumatik-Zylinder oder Sensoren, gemessen werden. Eine alternative Messstelle ist direkt am Vakuumgehäuse. Mit der so messbaren Temperatur kann eine Zustandserfassung für das Ventil erfolgen. Z.B. kann eine erhöhte Temperatur ein Indikator für eine damit verbundene Veränderung der Ventiltätigkeit sein. Hierbei kann ein vergrössertes Spiel der Antriebseinheit auftreten. Durch die Kenntnis der Temperaturauswirkung und die gleichzeitige Messung der Temperatur, kann die Funktionssicherheit des Ventils stets überwacht und eingestellt werden.

Basierend auf den so erfassbaren Informationen kann eine Ansteuerung des Ventils angepasst werden. Wird beispielsweise eine hohe Temperatur gemessen und es ist zudem bekannt, in welcher Weise diese Temperatur das Verhalten des Ventils beeinflusst, so kann durch eine Anpassung der Steuerung der Antriebseinheit eine möglicherweise negative Auswirkung kompensiert werden. Ist z.B. ein verändertes Biegeverhalten der Antriebseinheit oder einer Ventilstange zu erwarten, so kann ein grösserer Anpressdruck (auf die Dichtung) eingestellt werden.

Bei der Anpassung der Steuerung können ebenso weitere Parameter und Messdaten, die ein Verhalten des Ventils beeinflussen, berücksichtigt werden.

Generell erlaubt der Temperatursensor die Erzeugung einer Information, ob eine gemessene Temperatur in einem Sollbereich liegt oder ob die Temperatur einen definierten Schwellwert überschreitet. Hierzu verfügt das Ventil bzw. dessen Verarbeitungs- und Steuerungseinheit über entsprechend gespeicherte Solldaten zum Abgleich mit aktuellen Messwerten.

Durch eine Überwachung und ggf. Aufzeichnung der Temperatur am Ventil über einen gewissen Zeitraum, insbesondere fortlaufend ab Inbetriebnahme, kann eine Information mit Bezug zu einer temperaturabhängigen Lebensdauer des Ventils erzeugt werden. So kann z.B. eine temperatur- und zeitbedingte Veränderung eines Dichtmaterials festgestellt und damit die Notwendigkeit eines Ersatzes des Dichtmaterials angezeigt werden. Auch ein Betrieb des Ventils ausserhalb eines idealen Temperaturbereichs und die Dauer dieses Betriebs können erfasst werden und bezüglich einer Auswirkung auf die Lebenserwartung bestimmter Ventilbauteile ausgewertet werden.

Als Temperatursensor kann z.B. ein PT100 Element verwendet werden. Dieses hat bei 0°C einen elektrischen Widerstand von 100 Ohm. Bei höherer Temperatur vergrössert sich dieser Widerstand in bekannter Weise. Der Widerstand kann gemessen und entsprechend ausgewertet werden und lässt damit eine Ermittlung einer absoluten Temperatur zu. Verwendet werden kann ein Element, welches direkt auf einer metallischen Fläche des Ventils befestigt werden kann, sodass die Oberflächentemperatur zumindest dieses Teils gemessen werden kann.

Denkbar sind ebenfalls entsprechend alternative Temperatursensoren des Standes der Technik. Beispielsweise kann ein optischer Sensor, welcher Messdaten mittels infraroter Strahlung bereitstellt, eingesetzt werden.

Durch die Überwachung der Ventiltemperatur sind Wartungsintervalle besser planbar und effizienter durchführbar, wobei gleichzeitig die Prozessintegrität gewahrt und gesichert bleibt.

Die Erfindung betrifft ein Vakuumventil, insbesondere ein Vakuumschieberventil, ein Pendelventil oder ein Monoventil, zur Regelung eines Volumen- oder Massenstroms und/oder zum gasdichten Unterbrechen eines Fliesswegs. Das Ventil hat einen Ventilsitz, der eine eine Öffnungsachse definierende Ventilöffnung und eine die Ventilöffnung umlaufende erste Dichtfläche aufweist, einen Ventilverschluss, insbesondere Ventilteller, zur Regelung des Volumen- oder Massenstroms und/oder zur Unterbrechung des Fliesswegs, mit einer zu der ersten Dichtfläche korrespondierenden zweiten Dichtfläche, und eine mit dem Ventilverschluss gekoppelte Antriebseinheit.

Die Abtriebseinheit ist derart ausgebildet, dass der Ventilverschluss von einer Offenposition, in welcher der Ventilverschluss und der Ventilsitz relativ zueinander kontaktlos vorliegen, in eine Schliessposition, in welcher über eine dazwischen liegende Dichtung ein dichtender Kontakt zwischen der ersten Dichtfläche und der zweiten Dichtfläche besteht und die Ventilöffnung dadurch gasdicht verschlossen ist, und zurück verstellbar ist.

Die Antriebseinheit kann z.B. als Elektromotor, z.B. Schrittmotor, oder als Pneumatikantrieb ausgebildet sein.

Das Vakuumventil weist mindestens einen Temperatursensor auf, wobei der Temperatursensor derart ausgebildet und angeordnet ist, dass mittels des Temperatursensors ein eine thermische Information mit Bezug zu zumindest einem Teil des Vakuumventils repräsentierendes Messsignal erfassbar ist.

Der Temperatursensor vermag damit ein Messsignal zur Verfügung zu stellen, das einen thermischen Zustand des Ventils oder einer Komponente des Ventils ableitbar macht, wobei das Signal z.B. direkt in einer Verarbeitungs- und Steuerungseinheit verarbeitet oder als Ausgabeinformation visuelle oder akustisch ausgegeben werden kann.

In einer Ausführungsform kann der Temperatursensor beispielsweise an der Antriebseinheit angeordnet sein.

Hierbei kann die Antriebseinheit insbesondere als pneumatischer Antrieb ausgebildet und der Temperatursensor an einem Pneumatik-Zylinder der Antriebseinheit angeordnet sein.

Bei solch einer Anordnung kann durch den Temperatursensor die thermische Information mit direktem Bezug zu einem Betriebszustand der Antriebseinheit erfasst werden, d.h. das Messsignal des Temperatursensors gibt direkten Aufschluss über eine Funktion des Öffnens und des Schliessens des Ventils. Z.B. kann mit einer Zunahme der Betriebstemperatur eine zunehmende Elastizität im System auftreten und diese damit erkannt und kompensiert werden.

Gemäss einer weiteren Ausführungsform kann der Temperatursensor an dem Ventilverschluss oder dem Ventilsitz angeordnet sein. Hierdurch kann z.B. der Zustand der Dichtung, z.B. eines polymerbasierten Dichtmaterials, überwacht werden. Bei niedrigen Temperaturen kann das Material deutlich steifer beschaffen sein als bei hohen Temperaturen und der Antrieb kann entsprechend auf das thermischbedingte Materialverhalten abgestimmt sein, z.B. hinsichtlich eines Soll-Anpressdrucks.

Das Vakuumventil kann in einer Ausbildung ein Ventilgehäuse aufweisen und der Temperatursensor kann an dem Ventilgehäuse angeordnet sein. Mit dieser Ausführung kann die thermische Information bezüglich des Gehäuses erfasst werden. Z.B. werden hierdurch äussere Einflüsse auf das Ventil (z.B. Veränderungen der Umgebungstemperatur) messbar.

In einer Ausführungsform kann der Temperatursensor ausgebildet sein als ein Heissleiter oder als ein Kaltleiter, insbesondere als Platin- oder Silizium-Messwiderstand, insbesondre Pt 100 Element. Der Temperatursensor kann ebenso als ein Halbleiter-Temperatursensor, insbesondere integrierter Halbleiter-Temperatursensor, als ein optischer Temperatursensor, insbesondere Infrarotthermometer, oder als ein Thermoelement ausgebildet sein. Diese Varianten von Temperatursensoren sind im Kontext der vorliegenden Erfindung nicht als abschliessend zu betrachten, vielmehr kommen auch alternative Sensortypen in Betracht, die ein thermisches Messsignal zur Verfügung stellen können.

Die thermische Information ist insbesondere durch eine Temperatur repräsentiert, kann aber beispielsweise auch in Form einer Wärmeenergie Ausdruck finden.

Gemäss einer Ausführungsform ist das Messsignal fortlaufend erfassbar. Hierzu kann das Vakuumventil über eine entsprechend mit einem Algorithmus konfigurierte Verarbeitungs- und Steuereinheit verfügen. Die fortlaufende Erfassung stellt eine kontinuierliche Überwachung und Überprüfung der Ventilfunktion in Abhängigkeit eines thermischen Zustands bereit.

In einer Ausführung kann die Antriebseinheit des Vakuumventils gesteuert durch eine Verarbeitungs- und Steuereinheit des Vakuumventils mit Steuerwerten zur Verstellung des Ventilverschlusses zwischen der Offenposition und der Schliessposition ansteuerbar sein. Die Verarbeitungs- und Steuereinheit ist dann insbesondere derart eingerichtet, dass die Steuerwerte in Abhängigkeit von dem aktuell erfassten Messsignal automatisch eingestellt werden. So kann eine automatische Kompensation von temperaturabhängigen (negativen) Effekten bereitgestellt werden.

Gemäss einer Ausführungsform der Erfindung kann das Vakuumventil eine derart ausgebildete Verarbeitungs- und Steuereinheit aufweisen, dass das erfasste Messsignal mittels der Verarbeitungs- und Steuereinheit verarbeitbar ist und anhand des erfassten Messsignals eine Zustandsinformation erzeugt wird. Ein Ausgabesignal kann basierend auf einem Abgleich der Zustandsinformation mit einem vordefinierten Toleranzwert bereitgestellt werden.

Insbesondere kann die Zustandsinformation bezüglich einer mechanischen und/oder strukturellen Integrität der Antriebseinheit, des Ventilsitzes und/oder des Ventilverschlusses bereitgestellt werden, insbesondere wobei die Zustandsinformation mittels eines Ist-Soll-Vergleichs für das erfasste Messsignal erzeugt ist.

Die Erfindung betrifft ausserdem ein Verfahren zur Steuerung eines Vakuumventils, insbesondere eines Vakuumschieberventils, Pendelventils oder Monoventils, wobei das Vakuumventil ausgebildet ist zur Regelung eines Volumen- oder Massenstroms und/oder zum gasdichten Unterbrechen eines Fliesswegs. Das Vakuumventil weist einen Ventilsitz, der eine eine Öffnungsachse definierende Ventilöffnung und eine die Ventilöffnung umlaufende erste Dichtfläche aufweist, und eine Ventilverschluss, insbesondere Ventilteller, zur Regelung des Volumen- oder Massenstroms und/oder zur Unterbrechung des Fliesswegs, mit einer zu der ersten Dichtfläche korrespondierenden zweiten Dichtfläche, deren veränderliche Lage durch eine jeweilige Position und Ausrichtung des Ventilverschlusses bestimmt ist, auf. Eine mit dem Ventilverschluss gekoppelte Antriebseinheit mit wenigstens einem beweglichen Verstellelement ist ebenso vorgesehen, wobei die Antriebseinheit zum Ausführen einer Verstellbewegung ausgebildet ist, so dass der Ventilverschluss von einer Offenposition, in welcher der Ventilverschluss und der Ventilsitz relativ zueinander kontaktlos vorliegen, in eine Schliessposition, in welcher, insbesondere über eine Dichtung, ein dichtender Kontakt zwischen der ersten Dichtfläche und der zweiten Dichtfläche besteht und die Ventilöffnung dadurch gasdicht verschlossen ist, und zurück verstellbar ist.

Im Rahmen des Verfahrens, insbesondere fortlaufend, wird eine thermische Information mit Bezug zu zumindest einem Teil des Vakuumventils erfasst.

In einer Ausführung kann die thermische Information während eines bestimmten Zeitabschnitts periodisch, insbesondere fortlaufend, erfasst und ein Temperatur-Zeit-Verlauf abgeleitet werden. Hierdurch kann eine Zustandsänderung des Ventils über einen bestimmten Zeitraum hinweg protokolliert, analysiert und z.B. zu einem Alarmsignal oder einer Wartungsaufforderung weiterverarbeitet werden.

In anderen Worten kann anhand des Temperatur-Zeit-Verlaufs eine Ausgabeinformation bezüglich eines Ventilzustands erzeugt werden, insbesondere wobei die Ausgabeinformation einen Bezug einer aktuellen Temperatur zu einem Temperaturschwellwert, insbesondere eine Überschreitung des Temperaturschwellwerts, angibt. Die Ausgabeinformation kann ferner eine Auswirkung des Temperatur-Zeit-Verlaufs auf einen Betriebszustand des Ventils, insbesondere auf eine Prozesssicherheit, eine Ventillebensdauer und/oder einen zu erwartenden Ventilwartungszeitpunkt angeben.

Die Erfindung betrifft auch ein Computerprogrammprodukt mit Programmcode, der auf einem maschinenlesbaren Träger, insbesondere einer Steuer- und Verarbeitungseinheit eines oben beschriebenen Vakuumventils, gespeichert ist, oder ein Computer-Daten-Signal, verkörpert durch eine elektromagnetische Welle, zur Durchführung des Erfassens der thermischen Information und/oder insbesondere eines obigen Verfahrens.

Das erfindungsgemässe Vakuumventil wird nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1a,b: eine mögliche erste Ausführungsform eines erfindungsgemässen Vakuumventils als Monoventil;
- Fig. 2a-c: eine mögliche weitere Ausführungsform eines erfindungsgemässen Vakuumventils als Transferventil;
- Fig. 3a,b: schematische Darstellung einer weiteren erfindungsgemässen Ausführungsform eines Vakuumventils als Pendelventil; und
- Fig. 4a,b: schematische Darstellung einer weiteren erfindungsgemässen Ausführungsform eines Vakuumventils als Transferventil.

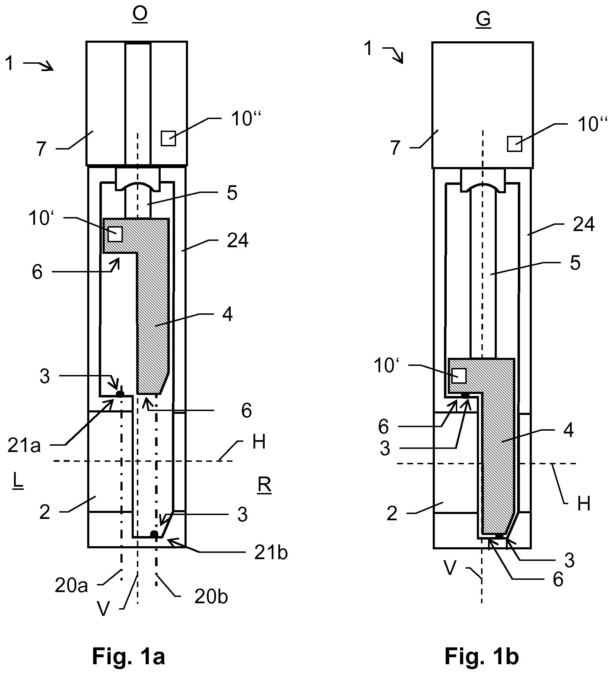

Die **Figuren 1a,1b** zeigen schematisch eine erste Ausführungsform eines erfindungsgemässen Vakuumventils 1.

Im Beispiel ist das Ventil 1 ausgeführt als ein so genanntes Monoventil und im Querschnitt dargestellt in einer Offenposition O (Fig. 1a) und einer Schliessposition G (Fig.1b).

Das Ventil 1 zum gasdichten Schliessen eines Fliesswegs mittels einer Linearbewegung besitzt ein Ventilgehäuse 24 mit einer Öffnung 2 für den Fliessweg, wobei die Öffnung 2 eine geometrische Öffnungsachse 5 entlang des Fliesswegs aufweist. Die Öffnung 2 verbindet einen ersten Gasbereich L, welcher sich in der Zeichnung links des Ventils 1 bzw. einer Trennwand (nicht dargestellt) befindet, mit einem zweiten Gasbereich R rechts davon. Eine solche Trennwand wird z.B. durch eine Kammerwand einer Vakuumkammer gebildet.

Das Verschlusselement 4 ist linear entlang einer zu der Öffnungsachse H quer verlaufenden, geometrischen Verstellachse V in einer Verschlusselementebene 22 von einer die Öffnung 2 freigebenden, geöffneten Position O in eine über die Öffnung 2 linear geschobene, geschlossene Position G in eine Schliessrichtung und umgekehrt zurück in eine Öffnungsrichtung mittels einer Antriebseinheit 7 mit einem beweglichen Stellelement 5, im Beispiel ein Verstellarm, verschiebbar.

Zum Beispiel umschliesst eine (gekrümmte) erste Dichtfläche 3 die Öffnung 2 des Ventilgehäuses 24 entlang eines ersten Abschnitts 21a in einer ersten Ebene 20a und entlang eines zweiten Abschnitts 21b in einer zweiten Ebene 20b. Die erste Ebene 20a und die zweite Ebene 20b sind zueinander beabstandet, verlaufen parallel zueinander und parallel zu der Verschlusselementebene 22. Somit weisen der erste Abschnitt 21a und der gegenüberliegende zweite Abschnitt 21b zueinander einen geometrischen Versatz quer zu der Verstellachse V und in Richtung der Öffnungsachse H auf. Zwischen den beiden gegenüberliegenden Abschnitten 21a und 21b in dem sich entlang der Verstellachse V erstreckenden Bereich ist die Öffnung 2 angeordnet.

Das Verschlusselement 4 weist eine zur ersten Dichtfläche 3 korrespondierende zweite Dichtfläche 6 auf, welche entlang zum ersten und zweiten Abschnitt 21a, 21b korrespondierender Abschnitte verläuft.

Im gezeigten Beispiel ist ein eine Dichtung bildendes Dichtmaterial an der erste Dichtfläche 3 des Ventilsitzes vorgesehen. Alternativ oder zusätzlich kann die Dichtung an der zweiten Dichtfläche 6 des Ventilverschlusses angeordnet sein.

Die Dichtung kann beispielsweise als Polymer mittels Vulkanisation auf den Ventilsitz aufvulkanisiert sein. Alternativ kann die Dichtung z.B. als O-Ring in einer Nut des Ventilsitzes ausgeführt sein. Auch kann ein Dichtmaterial auf den Ventilsitz aufgeklebt sein und dadurch die Dichtung verkörpern. Solche Dichtungen sind selbstverständlich nicht auf das im Beispiel beschriebene Ventil 1 beschränkt, sondern auch bei den weiteren beschriebenen Ventilausführungsformen anwendbar.

Monoventile, d.h. mittels einer einzigen linearen Bewegung schliessbare Vakuumventile haben beispielsweise den Vorteil eines vergleichsweise einfachen Schliessmechanismus, z.B. verglichen mit den mittels zweier Bewegungen schliessbaren Transferventilen, die einen verhältnismässig komplex aufgebauten Antrieb erfordern. Da das Verschlusselement zudem einteilig ausgebildet sein kann, kann es hohen Beschleunigungskräften ausgesetzt werden, so dass dieses Ventil auch für Schnell- und Notverschlüsse verwendet werden kann. Das Schliessen und Dichten kann mittels einer einzigen linearen Bewegung erfolgen, so dass ein sehr schnelles Schliessen und Öffnen des Ventils 1 möglich ist.

Insbesondere liegt ein Vorteil von Monoventilen beispielsweise darin, dass die Dichtung aufgrund ihres Verlaufs beim Schliessen keiner Querbelastung in Querrichtung zur Längserstreckung der Dichtung unterliegt. Andererseits ist die Dichtung aufgrund Ihrer Quererstreckung zur Öffnungsachse H kaum in der Lage, auf das Verschlusselement 4 entlang der Öffnungsachse H auftretende Kräfte, die insbesondere bei grossem Differenzdruck auf das Verschlusselement 4 wirken können, aufzunehmen, was einen robusten Aufbau des Verschlusselements 4, dessen Antriebs und dessen Lagerung erfordert.

Das in den Figuren 1a und 1b gezeigte Vakuumventil 1 umfasst erfindungsgemäss zwei Temperatursensoren 10' und 10". Zumindest einer der Sensoren 10',10" ist als ein Pt100 Element ausgebildet und steht in direktem Kontakt mit einer jeweiligen Ventilkomponente, d.h. mit der Antriebseinheit 7 bzw. dem Ventilverschluss 4. Der Temperatursensor 10',10" kann beispielsweise an der Antriebseinheit 7 bzw. dem Ventilverschluss 4 mittels einer Verschraubung fixiert sein oder aufgeklebt.

Mit dem ersten Temperatursensor 10' kann eine aktuelle Temperatur des Ventilverschlusses ermittelt werden. Der zweite Temperatursensor 10" ermöglicht die Erfassung einer Temperatur der Antriebseinheit.

An der Antriebseinheit 7 kann eine Zunahme einer Temperatur durch relativ zueinander bewegte Teile und der dabei auftretenden Reibung entstehen. Eine Temperaturerfassung an der Antriebseinheit 7 ermöglicht damit das Feststellen eines aktuellen Betriebszustands der Antriebseinheit 7. So kann beispielsweise eine Überhitzung oder allgemein ein kritischer Betrieb der Antriebseinheit 7 vermieden werden. Wird das Erreichen eines Temperaturschwellwerts oder eines Toleranzbereichs um den Temperaturschwellwert registriert, kann die Antriebseinheit entsprechend für einen lastärmeren Betrieb angesteuert werden bzw. gestoppt werden. Alternativ kann eine Kühleinheit für den Antrieb 7 bzw. das Ventil 1 gestartet oder mit einer grösseren Leistungsstufe betrieben werden.

Zudem kann die Temperaturmessung an der Antriebseinheit 7 einen Ventilzustand hinsichtlich einer Präzision des Verstellweges für das Verschlusselement 4 repräsentieren. Bei einer vorliegenden erhöhten Temperatur kann ein Spiel in der Führung der Antriebseinheit 7 oder der Ventilstange 5 entstehen bzw. zunehmen und eine entsprechende Anpassung von Steuerungsparametern erforderlich machen, damit eine gewünscht zuverlässige Funktion des Ventils weiterhin gewährleistet bleibt. Eine solche Anpassung der Steuerung kann automatisch anhand aktueller Messsignale des Sensors 10" erfolgen.

Durch den zweiten Sensor 10' am Verschluss 4 kann zum einen eine Auswirkung der durch die Antriebseinheit 7 auftretenden Temperaturerhöhung erfasst werden und anhand einer solchen Messung Anpassungen in der Steuerung erfolgen.

Zudem kann mit dem Sensor 10' eine thermische Einwirkung durch einen Vakuumbearbeitungsprozess, der bei Einsatz des Ventils 1 an einer Seite der Öffnung 2 durchgeführt werden kann, ermittelt werden. Erfolgt z.B. ein Bearbeitungsprozess bei hoher Kammertemperatur kann diese Temperatur einen negativen Einfluss auf die Dichtung des Ventils 1 haben und zu einem beschleunigten Verschleiss der Dichtung führen. Durch die fortlaufende Erfassung dieser Temperatur können die Lebensdauer der Dichtung und damit die Zuverlässigkeit des Vakuumverschlusses in Abhängigkeit der Betriebszeit bestimmt werden. Ein optimierter und zeitgerechter Austausch der Dichtung wird hierdurch ermöglicht, d.h. ein entsprechendes Wartungserfordernis kann vorherbestimmt und geplant werden. Stillstandzeiten können so deutlich reduziert und zumindest teilweise vermieden werden.

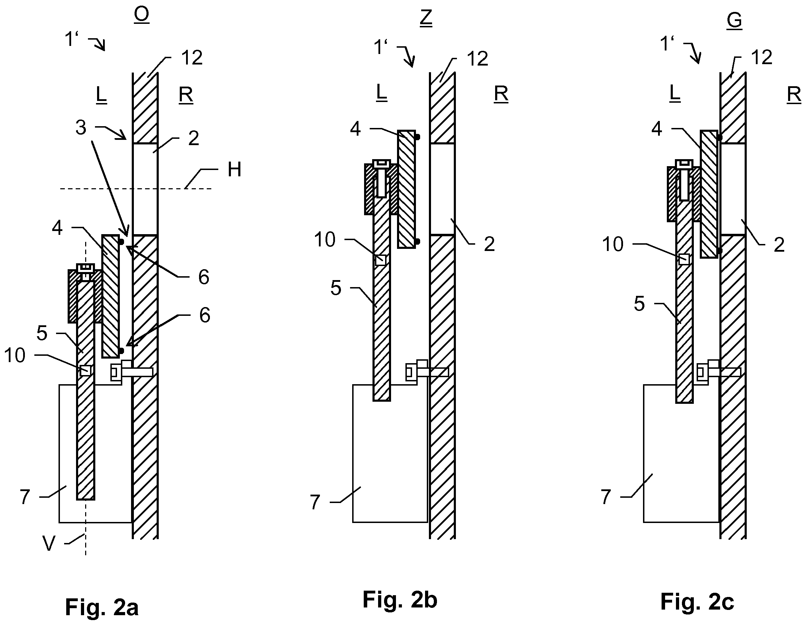

Die **Figuren 2a-2c** zeigen eine weitere Ausführungsform eines erfindungsgemässen Vakuumventils 1', welches als Transferventil 1'ausgebildet ist, dargestellt in unterschiedlichen Verschlusspositionen.

Das gezeigte Transferventil 1' ist eine Sonderform eines Schieberventils. Das Vakuumventil 1' hat ein rechteckiges, plattenförmiges Verschlusselement 4 (Ventilteller), das eine Dichtfläche 6 zum gasdichten Verschliessen einer Öffnung 2 aufweist. Die Öffnung 2 hat einen dem Verschlusselement 4 entsprechenden Querschnitt und ist in einer Wand 12 ausgeformt. Die Öffnung 2 ist von einem Ventilsitz, der seinerseits ebenfalls eine mit der Dichtfläche 6 des Verschlusselements 4 korrespondierende Dichtfläche 3 bereitstellt, umgeben. Die Dichtfläche 6 des Verschlusselements 4 umläuft das Verschlusselement 4 und weist ein Dichtmaterial (Dichtung) auf. In einer Geschlossenposition wird die Dichtung zwischen den Dichtflächen 6, 3 verpresst.

Die Öffnung 2 verbindet einen ersten Gasbereich L, welcher sich links der Wand 12 befindet, mit einem zweiten Gasbereich R rechts der Wand 12. Die Wand 12 wird z.B. durch eine Kammerwand einer Vakuumkammer gebildet. Das Vakuumventil 1' wird dann durch ein Zusammenwirken der Kammerwand 12 mit dem Verschlusselement 4 gebildet.

Das Verschlusselement 4 ist an einem Verstellarm 5 angeordnet, der hier beispielsweise stangenförmig ist, und sich entlang einer geometrischen Verstellachse V erstreckt. Der Verstellarm 5 ist mit einer Antriebseinheit 7 mechanisch gekoppelt, mittels welcher das Verschlussglied 4 in dem ersten Gasbereich L links der Wand 12 durch Verstellen des Verstellarms 5 mittels der Antriebseinheit 7 zwischen einer Offenposition O (Fig.2a) über eine Zwischenposition Z (Fig.2b) in eine Schliessposition G (Fig.2c) verstellbar ist.

In der Offenposition O befindet sich das Verschlusselement 4 ausserhalb des Projektionsbereichs der Öffnung 2 und gibt diese vollständig frei, wie in Figur 2a gezeigt.

Durch Verstellen des Verstellarms 5 in axiale Richtung parallel zu der ersten, "vertikalen" Verstellachse V und parallel zu der Wand 12 kann das Verschlusselement 4 mittels der Antriebseinheit 7 von der Offenposition O in die Zwischenposition Z verstellt werden.

In dieser Zwischenposition Z (Figur 2b) befindet sich die Dichtfläche 6 des Verschlusselements 4 in beabstandeter Gegenüberlage zu der die Öffnung 2 umgebenden Dichtfläche 3 des Ventilsitzes.

Durch Verstellen des Verstellarms 5 in Richtung der zweiten, "horizontalen" Verstellachse H (quer zur ersten Verstellachse V), also z.B. senkrecht zur Wand 12 und zum Ventilsitz, kann das Verschlusselement 4 von der Zwischenposition Z in die Geschlossenposition G verstellt werden (Figur 2c).

In der Geschlossenposition G verschliesst das Verschlusselement 4 die Öffnung 2 gasdicht und trennt den ersten Gasbereich L von dem zweiten Gasbereich R gasdicht.

Das Öffnen und Schliessen des Vakuumventils erfolgt also mittels der Antriebseinheit 7 durch eine L-förmige Bewegung in zwei z.B. zueinander senkrechte Richtungen H, V des Verschlusselements 4 und des Verstellarms 5. Daher wird das gezeigte Transferventil auch L-Typ-Ventil genannt.

Ein Transferventil 1' wie gezeigt wird typischerweise zur Abdichtung eines Prozessvolumens (Vakuumkammer) und zur Be- und Entladung des Volumens vorgesehen. Häufige Wechsel zwischen der Offenposition O und der Geschlossenposition G sind bei einem solchen Einsatz die Regel. Hierdurch können verstärkte Abnutzungserscheinungen der Dichtflächen 6 und 3, der dazwischen liegenden Dichtung und der mechanisch bewegten Bauteile, z.B. des Verstellelements 5 oder anderer Teile der Antriebseinheit 7, eintreten.

Unter anderem zur frühzeitigen Feststellung solcher Abnutzungserscheinungen weist das Vakuumventil 1' erfindungsgemäss einen Temperatursensor 10 auf. Der Temperatursensor 10 ist hier an dem Verstellelement 5 angeordnet. Durch die Vielzahl sich wiederholender Öffnungs- und Schliessvorgänge kann sich das Verstellelement 5 z.B. aufgrund von Reibungseffekten während des Ventilbetriebs erwärmen. Eine Erwärmung des Verstellelements 5 kann wiederum zu einer verringerten Steifheit und damit vergrösserter Biegefähigkeit führen. Als Resultat kann sich ein verringerter Anpressdruck zwischen den beiden Dichtflächen 3 und 6 einstellen und damit eine gewünschte Dichtwirkung abnehmen oder ausbleiben.

Durch eine Temperaturerfassung an dem Verstellelement 5 selbst kann eine solche Veränderung der Ventilfunktion erkannt und kompensiert werden. Beispielsweise ist ein Schwellwert für eine Temperatur des Verstellelements 5 bekannt, bei welchem eine zu hohe Elastizität des Verstellelements 5 vorliegt und dann im Normalbetrieb keine zuverlässige Abdichtung mehr bereit gestellt werden kann. Der Temperatursensor 10 erlaubt also das Feststellen, ob die Temperatur unterhalb oder oberhalb des Schwellwerts liegt und damit ob eine diesbezügliche Integrität eines Abdichtprozesses gewahrt ist oder nicht.

Wird ein Überschreiten des Schwellwerts festgestellt, so kann eine Ansteuerung der Antriebseinheit 7 angepasst werden. Z.B kann ein Verstellweg für das Erreichen der Geschlossenposition in Richtung der Verstellachse H vergrössert werden, so dass durch eine entsprechend vergrösserte Durchbiegung des Verstellelements 5 eine gewünschte Verpressung der Dichtung erreicht wird und die Abdichtung eines Vakuumvolumens weiterhin gewährleistet bleibt.

Die Anpassung der Ansteuerung kann vollautomatisch mittels einer Verarbeitungs- und Steuerungseinheit (nicht gezeigt) erfolgen. Messsignale des Temperatursensors 10 können hierzu z.B. per Funk oder kabelgebunden an die Verarbeitungs- und Steuerungseinheit übertragen werden. Ebenso können die Steuersignale von der Verarbeitungs- und Steuerungseinheit an die Antriebseinheit 7 übertragen werden. Die Verarbeitungs- und Steuerungseinheit kann direkt an dem Ventil 1' angeordnet sein oder als strukturell separierte Einheit ausgeführt sein (z.B. Laptop mit entsprechender Schnittstelle und Algorithmus) und in Kommunikationsverbindung stehen.

Die Anpassung der Steuerung kann kontinuierlich erfolgen, beispielsweise wenn das Biegeverhalten des Verstellelements 5 in Abhängigkeit von dessen Temperatur bekannt ist. So kann ein gleich bleibender Anpressdruck bei veränderlicher Temperatur bereitgestellt werden.

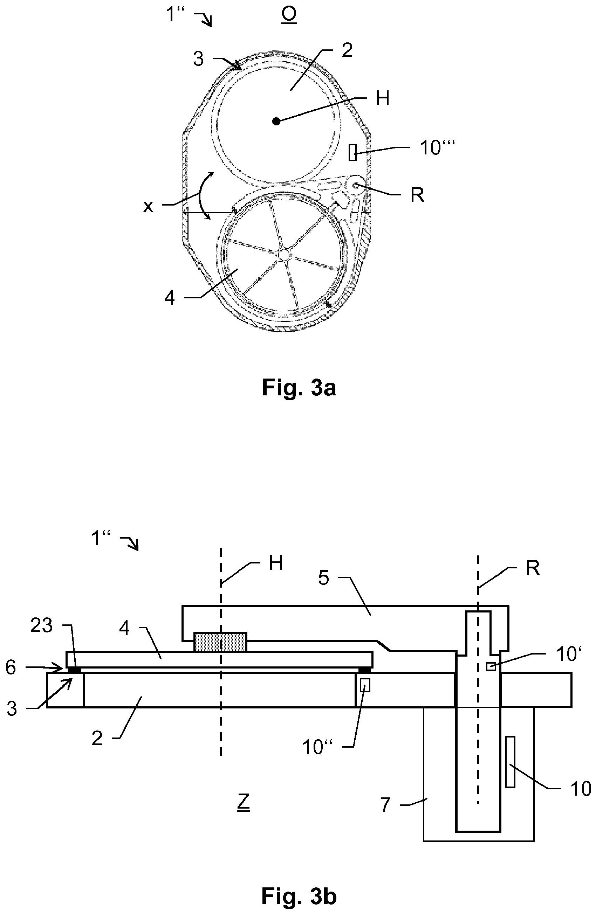

**Figur 3a** und **Figur 3b** zeigen schematisch eine weitere mögliche Ausführungsform des erfindungsgemässen Ventils in Form eines Pendelventils 1". Das Ventil 1 zumindest zum Regeln eines Massstroms besitzt ein Ventilgehäuse, welches eine Öffnung 2 aufweist. Die Öffnung 2 hat hier beispielsweise einen kreisrunden Querschnitt. Die Öffnung 2 wird von einem Ventilsitz umschlossen. Dieser Ventilsitz wird von einer axial in Richtung eines Ventiltellers 4 weisenden und quer zur Öffnungsachse H verlaufenden, die Form eines Kreisrings aufweisenden (ersten) Dichtfläche 3, welche im Ventilgehäuse ausgeformt ist, gebildet. Der Ventilteller 4 ist um eine Rotationsachse R schwenkbar und im Wesentlichen parallel zur Öffnungsachse H verstellbar. In einer Geschlossenstellung (Fig.3b) des Ventiltellers 4 (Ventilverschluss), ist die Öffnung 2 mittels des Ventiltellers 4, welcher eine zweite Dichtfläche 6 mit Dichtmaterial aufweist, gasdicht verschlossen. Eine Offenstellung des Ventiltellers 4 ist in Fig. 3a veranschaulicht.

Der Ventilteller 4 ist über ein seitlich an dem Teller angeordnetes, sich senkrecht zur Öffnungsachse H erstreckendes Verstellelement 5 (Arm) mit einer Antriebseinheit 7 verbunden. Dieser Arm 5 befindet sich in der Geschlossenstellung des Ventiltellers 4 ausserhalb des entlang der Öffnungsachse H geometrisch projizierten Öffnungsquerschnitts der Öffnung 2.

Der Antrieb 7 ist durch Einsatz eines Motors und eines entsprechenden Getriebes derart ausgebildet, dass der Ventilteller 4 - wie bei einem Pendelventil üblich - mittels einer Querbewegung x des Antriebs 7 quer zur Öffnungsachse H und im Wesentlichen parallel über den Querschnitt der Öffnung 2 und senkrecht zur Öffnungsachse H in Form einer Schwenkbewegung um die Schwenkachse R zwischen einer Offenstellung und einer Zwischenstellung schwenkbar und mittels einer parallel zur Öffnungsachse H erfolgenden Längsbewegung des Antriebs 7 linear verschiebbar ist. In der Offenstellung, ist der Ventilteller 4 in einem seitlich neben der Öffnung 2 angeordneten Verweilabschnitt positioniert, so dass die Öffnung 2 und der Fliessweg freigegeben sind. In der Zwischenstellung ist der Ventilteller 4 über der Öffnung 2 beabstandet positioniert und überdeckt den Öffnungsquerschnitt der Öffnung 2. In der Geschlossenstellung ist die Öffnung 2 gasdicht geschlossen und der Fliessweg unterbrochen, indem ein gasdichter Kontakt zwischen der Dichtfläche 6 des Ventilverschluss 4 (Ventilteller) und der Dichtfläche 3 des Ventilsitz besteht.

Um ein automatisiertes und geregeltes Öffnen und Schliessen des Ventils 1 zu ermöglichen, sieht das Ventil 1" beispielsweise eine elektronische Regel- und Steuerungseinheit vor (nicht dargestellt), die derart ausgebildet ist und mit dem Antrieb 7 in derartiger Verbindung steht, dass der Ventilteller 4 zum Abschliessen eines Prozessvolumens oder zum Regeln eines Innendrucks dieses Volumens entsprechend verstellbar ist.

Im vorliegenden Ausführungsbeispiel ist der Antrieb 7 als ein Elektromotor ausgebildet, wobei das Getriebe derart umschaltbar ist, dass ein Antreiben des Antriebs 7 entweder die Querbewegung x oder die Längsbewegung bewirkt. Der Antrieb mitsamt Getriebe wird von der Regelung elektronisch angesteuert. Derartige Getriebe, insbesondere mit Kulissenschaltungen, sind aus dem Stand der Technik bekannt. Weiters ist es möglich, mehrere Antriebe zum Bewirken der Rotationsbewegung und der linearen Bewegung einzusetzen, wobei die Steuerung die Ansteuerung der Antriebe übernimmt.

Das präzise Regeln bzw. Einstellen des Durchflusses mit dem beschriebenen Pendelventil 1" ist nicht nur durch das schwenkende Verstellen des Ventiltellers 4 zwischen der Offenstellung und der Zwischenstellung mittels der Querbewegung, sondern vor allem durch lineares Verstellen des Ventiltellers 4 entlang der Öffnungsachse H bzw. R zwischen der Zwischenstellung und der Geschlossenstellung mittels der Längsbewegung möglich. Das beschriebene Pendelventil kann für präzise Regelaufgaben eingesetzt werden.

Sowohl der Ventilteller 4 als auch der Ventilsitz besitzen jeweils eine Dichtfläche - eine erste und eine zweite Dichtfläche 3 und 6. Die zweite Dichtfläche 6 des Ventiltellers 4 weist zudem die Dichtung 23 auf. Diese Dichtung 23 kann beispielsweise als Polymer mittels Vulkanisation auf den Ventilteller 4 aufvulkanisiert sein. Alternativ kann die Dichtung 23 z.B. als O-Ring in einer Nut des Ventilsitzes ausgeführt sein. Auch kann ein Dichtmaterial auf den Ventilteller 4 oder den Ventilsitz aufgeklebt sein und dadurch die Dichtung 23 verkörpern. In einer alternativen Ausführungsform kann die Dichtung 23 seitens des Ventilsitzes, insbesondere auf der ersten Dichtfläche 3, angeordnet sein. Auch Kombinationen dieser Ausführungen sind denkbar. Solche Dichtungen 23 sind selbstverständlich nicht auf das im Beispiel beschriebene Ventil 1" beschränkt, sondern auch bei den weiteren beschriebenen Ventilausführungsformen anwendbar.

Der Ventilteller 4 wird beispielsweise anhand von Regelgrössen und eines ausgegebenen Steuersignals variabel eingestellt. Als Inputsignal wird zum Beispiel eine Information über einen aktuellen Druckzustand in einem mit dem Ventil 1" verbundenen Prozessvolumen erhalten. Zudem kann dem Regler eine weitere Inputgrösse, z.B. ein Massenzustrom in das Volumen, bereitgestellt werden. Anhand dieser Grössen und anhand eines vorgegebenen Solldrucks, der für das Volumen eingestellt bzw. erreicht werden soll, erfolgt dann eine geregelte Einstellung des Ventils 1" über die Zeit eines Regelzyklus, so dass ein Massenabfluss aus dem Volumen mittels des Ventils 1" über die Zeit geregelt werden kann. Hierzu ist hinter dem Ventil 1" eine Vakuumpumpe vorgesehen, d.h. das Ventil 1" ist zwischen der Prozesskammer und der Pumpe angeordnet. Somit kann ein gewünschter Druckverlauf eingeregelt werden.

Durch die Einstellung des Ventilverschlusses 4 wird ein jeweiliger Öffnungsquerschnitt für die Ventilöffnung 2 eingestellt und damit die mögliche Gasmenge eingestellt, die pro Zeiteinheit aus dem Prozessvolumen evakuiert werden kann. Der Ventilverschluss 4 kann zu diesem Zweck eine von einer kreisrunden Form abweichende Form aufweisen, insbesondere um einen möglichst laminaren Medienfluss zu erreichen.

Zur Einstellung des Öffnungsquerschnitts ist der Ventilteller 4 durch die Regel- und Steuerungseinheit mittels der Querbewegung des Antriebs 7 von der Offenstellung in die Zwischenstellung und mittels der Längsbewegung des Antriebs 7 von der Zwischenstellung in die Geschlossenstellung verstellbar. Zum vollständigen Öffnen des Fliesswegs ist der Ventilteller 4 durch die Steuerung mittels der Längsbewegung des Antriebs 7 von der Schliessstellung in der Zwischenstellung und von dort aus mittels der Drehbewegung des Antriebs 7 von der Zwischenstellung in die Offenstellung verstellbar.

Das Anpressen des Ventiltellers 4 auf den Ventilsitz muss derart erfolgen, dass sowohl die geforderte Gasdichtigkeit innerhalb des gesamten Druckbereichs sichergestellt ist, als auch eine Beschädigung des Ventils 1", oder genauer der Dichtflächen 3 und 6 bzw. der Dichtung(en) 23 durch zu grosse Druckbeanspruchung vermieden wird. Um dies zu gewährleisten, sehen bekannte Ventile eine in Abhängigkeit von der zwischen den beiden Ventiltellerseiten herrschenden Druckdifferenz geregelte Anpressdruckregelung des Ventiltellers 4 vor.

Erfindungsgemäss weist das Ventil 1" vier Temperatursensoren 10, 10', 10" und 10''' auf. Jeder Sensor ist derart an dem Ventil angeordnet, dass eine komponentenspezifische Temperatur erfasst werden kann.

Der erste Sensor 10 ist an der Antriebseinheit 7 vorgesehen und vermag daher eine Information über den Antriebszustand zu erfassen. Mögliche Wärmeentwicklung des Antriebs 7 können hierdurch erfasst werden.

Ein zweiter Temperatursensor 10' ist an einem beweglichen Teil des Ventils 1", einer Ventilstange zur Verbindung des Verstellarms 5 mit der Antriebseinheit 7, platziert. Thermische Einflüsse z.B. aufgrund von Reibungseffekten können hiermit festgestellt und eine strukturelle Abweichung des Gestänges kann angezeigt werden.

Ein dritter Sensor 10" ist am Ventilsitz nahe der ersten Dichtfläche 3 angeordnet. Mit diesem kann eine Temperaturerhöhung bei der Dichtfläche 3 oder des Dichtmaterials 23 festgestellt werden. Eine solche Temperaturzunahme kann z.B. aufgrund einer Vielzahl von Schliessprozessen entstehen oder kann ein Indikator für eine auftretende Reibung an der Dichtung sein. Die Information erlaubt also zum einen ein Protokollieren des Dichtungszustands bzw. einer Alterung der Dichtung aufgrund von Temperaturschwankungen für eine verbesserte Wartungsplanung und verkürzte Stillstandzeiten. Zum zweiten kann eine Feststellung von unerwünschter Reibung erfolgen, welche ein Indikator für einen kritischen Ventilbetrieb sein kann. Durch solche Reibungen, insbesondere an dem Dichtmaterial 23, können Partikel entstehen, die eine Verunreinigung des Vakuums bewirken können und sich damit negativ auf einen Bearbeitungsprozess auswirken können.

Mit dem vierten Sensor 10''', der an dem Ventilgehäuse angeordnet ist, können beispielsweise externe thermische Einflüsse erfasst werden. Hierzu zählen z.B. eine beabsichtigte hohe Bearbeitungstemperatur im Vakuumvolumen, die eine Lebensdauer der Dichtung mitbestimmen kann, oder erhöhte Umgebungstemperaturen, die eine Auswirkung auf die Präzision einer Schliessbewegung haben können.

Jeder Sensor stellt also eine Information bereit, durch deren Weiterverbreitung eine gezielte Kompensation des Ventilbetriebs eingestellt werden kann oder ein entsprechendes Ausgabesignal, z.B. Alarm, erzeugt werden kann. Hierzu erfolgt typischerweise ein Vergleich der jeweils gemessene Temperaturen mit zugeordneten Sollzuständen (z.B. Solltemperaturen oder Soll-Temperaturverlauf).

Es versteht sich, dass die vier Sensoren 10-10''' hier rein beispielhaft in Kombination dargestellt sind. Die Erfindung umfasst ebenso solche Ausführungsformen, die nur einen dieser beschriebenen Sensoren aufweisen.

Alternativ zu einem Pendelventil 1" wie dargestellt kann das erfindungsgemässe Vakuumventil 1 mit einem anderen Vakuumventiltyp, z.B. einem Klappventil, Schieberventil oder einem sog. Butterfly-Regelventil, realisiert sein. Ferner sind ebenso Pendelventile einsetzbar, deren Verschluss nur in einer Richtung verstellt werden kann.

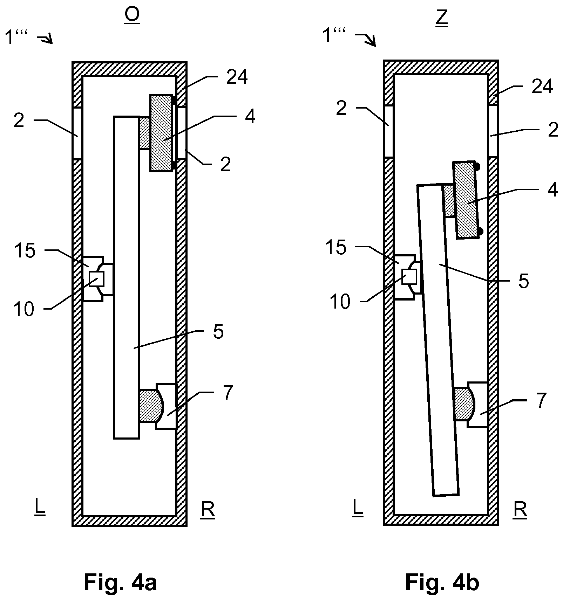

Die **Figuren 4a** und **4b** zeigen schematisch eine weitere mögliche Temperatursensoranordnung 10 in erfindungsgemässen Transferventilen, dargestellt in einer Geschlossenposition (Fig.4a) und einer Offenposition (Fig.4b). In den gezeigten Figuren ist der Ventilsitz an einem Gehäuse 24 des Vakuumventils 1''' ausgebildet. Für einen Fachmann ist jedoch klar, dass die nachfolgende Beschreibung im Wesentlichen analog auf Ausführungsformen anwendbar ist, wobei der Ventilsitz von einer Prozesskammer, d.h. einem Kammergehäuse, bereitgestellt wird.

Weiterhin versteht es sich von selbst, dass der hier rein schematisch als Kippmechanismus dargestellte Ventilmechanismus nicht einschränkend zu verstehen ist und ein Fachmann die erfinderische Sensoranordnung beispielsweise in analoger Weise auf einen beliebigen L-Motion Antrieb übertragen kann, z.B. einen L-Motion Antrieb mit zwei senkrecht aufeinander stehenden linearen Verstellrichtungen des Ventiltellers.

Zur kontrollierten Führung des Verstellarms 5 weist das Vakuumventil 1 hier beispielsweise eine Führungskomponente 15 auf, wobei die Antriebseinheit 7 und die Führungskomponente 15 jeweils in einer festen Anordnung zueinander stehen, hier beispielsweise dadurch, dass sowohl die Antriebseinheit 7 wie auch die Führungskomponente 15 jeweils ortsfest mit dem Ventilgehäuse 24 verbunden sind. Der Verstellarm 5 ist ferner mit dem Ventilverschluss 4 und der Antriebseinheit 7 mechanisch gekoppelt, wobei durch Verstellen des Verstellarms 5 mittels der Antriebseinheit 7, der Ventilverschluss 4 zwischen der Offenposition und der Schliessposition im Wesentlichen parallel zum Ventilsitz verstellbar ist, insbesondere in einer L-Motion Bewegung wie in den Figuren 2a bis 2c beschrieben.

Erfindungsgemäss weist die Führungskomponente einen Temperatursensor 10 auf. Der Temperatursensor 10 ermöglicht das Erfassen einer thermischen Veränderung an der Führungskomponente 15, insbesondere verursacht durch an der Führungskomponente 15 auftretender Reibung.

Es versteht sich, dass diese dargestellten Figuren nur mögliche Ausführungsbeispiele schematisch darstellen. Die verschiedenen Ansätze können ebenso miteinander sowie mit Vorrichtungen und Verfahren des Stands der Technik kombiniert werden.

## Patentansprüche

1. Vakuumventil (1,1',1",1'''), insbesondere Vakuumschieberventil, Pendelventil oder Monoventil, zur Regelung eines Volumen- oder Massenstroms und/oder zum gasdichten Unterbrechen eines Fliesswegs, mit
• einem Ventilsitz (3), der eine eine Öffnungsachse (H) definierende Ventilöffnung (2) und eine die Ventilöffnung (2) umlaufende erste Dichtfläche (3) aufweist,
• einem Ventilverschluss (4), insbesondere Ventilteller, zur Regelung des Volumen- oder Massenstroms und/oder zur Unterbrechung des Fliesswegs, mit einer zu der ersten Dichtfläche (3) korrespondierenden zweiten Dichtfläche (6),
• einer mit dem Ventilverschluss (4) gekoppelten Antriebseinheit (7), die derart ausgebildet ist, dass der Ventilverschluss (4) von
□ einer Offenposition (O), in welcher der Ventilverschluss (4) und der Ventilsitz (3) relativ zueinander kontaktlos vorliegen, in
□ eine Schliessposition (G), in welcher über eine dazwischen liegende Dichtung (23) ein dichtender Kontakt zwischen der ersten Dichtfläche (3) und der zweiten Dichtfläche (6) besteht und die Ventilöffnung (2) dadurch gasdicht verschlossen ist,
und zurück verstellbar ist,
**dadurch gekennzeichnet, dass**
das Vakuumventil (1,1',1'',1''') mindestens einen Temperatursensor (10,10',10",10''') aufweist, wobei der Temperatursensor (10,10',10'',10''') derart ausgebildet und angeordnet ist, dass mittels des Temperatursensors (10,10',10",10''') ein eine thermische Information mit Bezug zu zumindest einem Teil des Vakuumventils (1,1',1'',1''') repräsentierendes Messsignal erfassbar ist.

2. Vakuumventil (1,1',1'',1''') nach Anspruch 1,
**dadurch gekennzeichnet, dass**
der Temperatursensor (10,10',10'',10''') an der Antriebseinheit (7) angeordnet ist.

3. Vakuumventil (1,1',1'',1''') nach Anspruch 1 oder 2,
**dadurch gekennzeichnet, dass**
die Antriebseinheit (7) als pneumatischer Antrieb ausgebildet ist und der
Temperatursensor (10,10',10'',10''') an einem Pneumatik-Zylinder der Antriebseinheit angeordnet ist.

4. Vakuumventil (1,1',1'',1''') nach einem der Ansprüche 1 bis 3,
**dadurch gekennzeichnet, dass**
der Temperatursensor (10,10',10'',10''') an dem Ventilverschluss (4) oder dem Ventilsitz (3) angeordnet ist.

5. Vakuumventil (1,1',1'',1''') nach einem der Ansprüche 1 bis 4,
**dadurch gekennzeichnet, dass**
das Vakuumventil (1,1',1'',1''') ein Ventilgehäuse (24) aufweist und der Temperatursensor (10,10',10",10''') an dem Ventilgehäuse (24) angeordnet ist.

6. Vakuumventil (1,1',1'',1''') nach einem der Ansprüche 1 bis 5,
**dadurch gekennzeichnet, dass**
der Temperatursensor (10,10',10",10''') als einer der nachfolgend genannten Temperatursensoren ausgebildet ist:
• ein Heissleiter,
• ein Kaltleiter, insbesondere ein Platin- oder Silizium-Messwiderstand, insbesondre Pt 100 Element,
• ein Halbleiter-Temperatursensor, insbesondere integrierter Halbleiter-Temperatursensor,
• ein optischer Temperatursensor, insbesondere Infrarotthermometer,
• ein Thermoelement.

7. Vakuumventil (1,1',1'',1''') nach einem der Ansprüche 1 bis 6,
**dadurch gekennzeichnet, dass**
die thermische Information durch eine Temperatur repräsentiert ist.

8. Vakuumventil (1,1',1'',1''') nach einem der Ansprüche 1 bis 7,
**dadurch gekennzeichnet, dass**
das Messsignal fortlaufend erfassbar ist.

9. Vakuumventil (1,1',1'',1''') nach einem der Ansprüche 1 bis 8,
**dadurch gekennzeichnet, dass**
• gesteuert durch eine Verarbeitungs- und Steuereinheit des Vakuumventils (1,1',1'',1''') die Antriebseinheit (7) mit Steuerwerten zur Verstellung des Ventilverschlusses (4) zwischen der Offenposition (O) und der Schliessposition (G) ansteuerbar ist, und
• die Verarbeitungs- und Steuereinheit derart eingerichtet ist, dass die Steuerwerte in Abhängigkeit von dem aktuell erfassten Messsignal automatisch eingestellt werden.

10. Vakuumventil (1,1',1'',1''') nach einem der Ansprüche 1 bis 9,
**dadurch gekennzeichnet, dass**
das Vakuumventil (1,1',1'',1''') eine derart ausgebildete Verarbeitungs- und Steuereinheit aufweist, dass das erfasste Messsignal mittels der Verarbeitungs- und Steuereinheit verarbeitbar ist und anhand des erfassten Messsignals eine Zustandsinformation erzeugt wird,
insbesondere wobei basierend auf einem Abgleich der Zustandsinformation mit einem vordefinierten Toleranzwert ein Ausgabesignal bereitgestellt wird.

11. Vakuumventil (1,1',1'',1''') nach Anspruch 10,
**dadurch gekennzeichnet, dass**
die Zustandsinformation bezüglich einer mechanischen und/oder strukturellen Integrität der
Antriebseinheit (7), des Ventilsitzes (3) und/oder des Ventilverschlusses (4) bereitgestellt wird, insbesondere wobei die Zustandsinformation mittels eines Ist-Soll-Vergleichs für das erfasste Messsignal erzeugt ist.

12. Verfahren zur Steuerung eines
Vakuumventils (1,1',1",1'''), insbesondere eines Vakuumschieberventils, Pendelventils oder Monoventils, wobei das Vakuumventil (1,1',1'',1''') ausgebildet ist zur Regelung eines Volumen- oder Massenstroms und/oder zum gasdichten Unterbrechen eines Fliesswegs und das Vakuumventil (1,1',1'',1''') aufweist
• einen Ventilsitz (3), der eine eine Öffnungsachse (H) definierende Ventilöffnung (2) und eine die Ventilöffnung (2) umlaufende erste Dichtfläche (3) aufweist,
• einen Ventilverschluss (4), insbesondere Ventilteller, zur Regelung des Volumen- oder Massenstroms und/oder zur Unterbrechung des Fliesswegs, mit einer zu der ersten Dichtfläche (3) korrespondierenden zweiten Dichtfläche (6), deren veränderliche Lage durch eine jeweilige Position und Ausrichtung des Ventilverschlusses (4) bestimmt ist,
• einer mit dem Ventilverschluss (4) gekoppelten Antriebseinheit (7) mit wenigstens einem beweglichen Verstellelement (5), wobei die Antriebseinheit (7) zum Ausführen einer Verstellbewegung ausgebildet ist, so dass der Ventilverschluss (4) von
▭ einer Offenposition (O), in welcher der Ventilverschluss (4) und der Ventilsitz relativ zueinander kontaktlos vorliegen, in
▭ eine Schliessposition (G), in welcher, insbesondere über eine Dichtung (23), ein dichtender Kontakt zwischen der ersten Dichtfläche (3) und der zweiten Dichtfläche (6) besteht und die Ventilöffnung (2) dadurch gasdicht verschlossen ist,
und zurück verstellbar ist,
**dadurch gekennzeichnet, dass**
im Rahmen des Verfahrens, insbesondere fortlaufend, eine thermische Information mit Bezug zu zumindest einem Teil des Vakuumventils (1,1',1'',1''') erfasst wird.

13. Verfahren nach Anspruch 12,
**dadurch gekennzeichnet, dass**
die thermische Information während eines bestimmten Zeitabschnitts periodisch, insbesondere fortlaufend, erfasst wird und ein Temperatur-Zeit-Verlauf abgeleitet wird.

14. Verfahren nach Anspruch 13,
**dadurch gekennzeichnet, dass**
anhand des Temperatur-Zeit-Verlaufs eine Ausgabeinformation bezüglich eines Ventilzustands erzeugt wird, insbesondere wobei die Ausgabeinformation angibt
• einen Bezug einer aktuellen Temperatur zu einem Temperaturschwellwert, insbesondere eine Überschreitung des Temperaturschwellwerts,
• eine Auswirkung des Temperatur-Zeit-Verlaufs auf einen Betriebszustand des Ventils, insbesondere auf eine Prozesssicherheit,
• eine Ventillebensdauer und/oder
• einen zu erwartenden Ventilwartungszeitpunkt.

15. Computerprogrammprodukt mit Programmcode, der auf einem maschinenlesbaren Träger, insbesondere einer Steuer- und Verarbeitungseinheit eines
Vakuumventils (1,1',1'',1''') nach Anspruch 1, gespeichert ist, oder Computer-Daten-Signal, verkörpert durch eine elektromagnetische Welle, zur Durchführung
• des Erfassens der thermischen Information nach Anspruch 12
• und insbesondere eines Verfahrens nach einem der Ansprüche 13 bis 14.
